# EUROPÄISCHE PATENTANMELDUNG

(11) **EP 2 305 419 A1**
(43) Veröffentlichungstag der Anmeldung: **06.04.2011**
(21) Anmeldenummer: 10010966.9
(22) Anmeldetag: 06.02.2009
(51) Int. Cl.: B23Q 1/54

(54) **Aufspannvorrichtung für eine rechnergesteuerte, spanabhebende Bearbeitungsmaschine**

(30) Priorität: 15.02.2008 AT 2522008
(62) Teilanmeldung aus: 09710360.0
(71) Anmelder: STEGER, Heinrich, 39031 Bruneck (IT)
(72) Erfinder: STEGER, Heinrich, 39031 Bruneck (IT)
(74) Vertreter: Gangl, Markus

(57) **Zusammenfassung**

Aufspannvorrichtung für eine rechnergesteuerte, spanabhebende Bearbeitungsmaschine (1), insbesondere für eine CAD/CAM - Fräseinrichtung, zur Herstellung von zahntechnischen Werkstücken mit einer verschiebbar gelagerten Haltevorrichtung (3), an der eine Trägerplatte (4) zur Aufnahme eines Formrohlings (7) gelagert ist, wobei die Trägerplatte (4) wenigstens eine Durchtrittsöffnung (5) aufweist, in der der Formrohling (7) wenigstens um eine zur Hauptebene der Trägerplatte (4) im Wesentlichen parallele Drehachse (a, b) schwenkbar anordenbar bzw. angeordnet ist und dass die verschiebbar gelagerte Haltevorrichtung (3) bügelförmig, vorzugsweise im Wesentlichen U-förmig, ausgebildet ist und zwei im Wesentlichen parallele Schenkel (14, 14') sowie einen die beiden Schenkel verbindenden Steg (15) aufweist, wobei die Trägerplatte (4) zwischen den seitlichen Schenkeln (14, 14') der bügelförmigen Haltevorrichtung (3) drehbar gelagert ist.

## Beschreibung

Die Erfindung betrifft eine Aufspannvorrichtung für eine rechnergesteuerte, spanabhebende Bearbeitungsmaschine, insbesondere für eine CAD/CAM - Fräseinrichtung, zur Herstellung von zahntechnischen Werkstücken mit einer verschiebbar gelagerten Haltevorrichtung, an der eine Trägerplatte zur Aufnahme eines Formrohlings gelagert ist.

Bei einem bekannten CAD/CAM-System zur Herstellung von zahntechnischen Werkstücken wird zunächst ein Modell des Zahnstumpfes dreidimensional vermessen und computergesteuert die Struktur des herzustellenden Werkstückes berechnet. Anhand dieser Daten wird ein Fräsprogramm für eine Fräsmaschine berechnet, die aus einem Formrohling die gewünschte Struktur herausfräst. Der Formrohling besteht dabei aus vorgesinterem Zirkonoxid, das im Vergleich zu durchgesintertem Material wesentlich weicher ist. Das auf diese Weise hergestellte zahntechnische Werkstück wird anschließend fertiggesintert.

Die bisher bekannten Bearbeitungsmaschinen zum Fräsen von Keramikwerkstücken orientieren sich an klassischen 3-Achs-Fräsmaschinen und sind deshalb nur eingeschränkt für eine anspruchsvolle Freiformflächenbearbeitung, wie sie bei zahntechnischen Werkstücken benötigt wird, geeignet. So muss bei den bekannten Frässystemen das Werkstück u. a. zur Bearbeitung der zweiten Seite umgespannt werden, was selbstredend Ungenauigkeiten zur Folge haben kann.

Aufgabe der vorliegenden Erfindung ist es daher, eine rechnergesteuerte, spanabhebende Bearbeitungsmaschine der eingangs erwähnten Art zu schaffen, die eine präzise Herstellung von zahntechnischen Werkstücken bei gleichzeitig einfacher Bedienung erlaubt und die zudem eine kostengünstige Lösung darstellt.

Erfindungsgemäß wird diese Aufgabe dadurch gelöst, dass die Trägerplatte wenigstens eine Durchtrittsöffnung aufweist, in der der Formrohling wenigstens um eine zur Hauptebene der Trägerplatte im Wesentlichen parallele Drehachse schwenkbar anordenbar bzw. angeordnet ist.

Gemäß einem weiteren Ausführungsbeispiel der Erfindung ist vorgesehen, dass der Formrohling um zwei zur Hauptebene der Trägerplatte im Wesentlichen parallele Drehachsen, die einen Winkel von vorzugsweise 90° einschließen, schwenkbar in der wenigstens einen Durchtrittsöffnung anordenbar bzw. angeordnet ist.

Auf diese Weise wird erreicht, dass zwei der notwendigen fünf Bewegungsachsen zur Freiformflächenbearbeitung über die Drehbarkeit bzw. Schwenkbarkeit des Formrohlings ermöglicht werden.

Ein bevorzugtes Ausführungsbeispiel der Erfindung sieht vor, dass die Trägerplatte an der verschiebbar gelagerten Haltevorrichtung um eine zu ihrer Hauptebene im Wesentlichen parallelen Drehachse drehbar gelagert ist, wobei die Drehachse des in der wenigstens einen Durchtrittsöffnung schwenkbar angeordneten Formrohlings mit der Drehachse der Trägerplatte einen Winkel von vorzugsweise 90° einschließt. Auf diese Weise ergibt sich eine besonders stabile Lösung, wobei die Lagepositionierung der Trägerplatte in einfacher Weise über einen direkt auf die Lagerung der Trägerplatte wirkenden Antriebsmotor realisiert werden kann.

Eine einfache und zudem spannungsfreie Befestigungsmöglichkeit für den Formrohling in der Durchtrittsöffnung ergibt sich, wenn - wie ein weiteres Ausführungsbeispiel vorsieht - der Formrohling in der wenigstens einen Durchtrittsöffnung mittels eines im Wesentlichen scheibenförmigen Halteelementes anordenbar bzw. angeordnet ist, wobei eine einfache und sichere Befestigung des Formrohlings gegeben ist, wenn der Formrohling in einer Durchtrittsöffnung des scheibenförmigen Halteelementes angeordnet, vorzugsweise geklebt, ist.

Gemäß einer weiteren bevorzugten Ausführungsform der Erfindung erfolgt die schwenkbare Anordnung des Formrohlings in der wenigstens einen Durchtrittsöffnung mittels einer Spannvorrichtung zum Fixieren des Formrohlings, wobei die Spannvorrichtung wenigstens um eine zur Hauptebene der Trägerplatte parallelen Drehachse schwenkbar an dieser angeordnet ist, wobei ein sicherer Halt des Formrohlings gewährleistet werden kann, wenn die Spannvorrichtung im Wesentlichen ringförmig, den Formrohling zumindest teilweise umschließend, ausgebildet ist und der Formrohling mittels des scheibenförmigen Halteelementes in der Spannvorrichtung anordenbar bzw. angeordnet ist.

Eine einfache Befestigungsmöglichkeit für den im scheibenförmigen Halteelement angeordneten Formrohling wird dabei erreicht, wenn die Spannvorrichtung wenigstens eine Klemmeinrichtung zum lösbaren Fixieren des Halteelementes aufweist, wobei es sich für eine einfache Handhabung als günstig herausgestellt hat, wenn wenigstens eine Klemmeinrichtung eine vorzugsweise mittels einer Stellschraube feststellbare Klemmbacke aufweist.

Anders ausgedrückt, erfolgt die Befestigung des Formrohlings mittels eines scheibenförmigen Halteelementes in der Durchtrittsöffnung einer zweiteilig ausgebildeten Trägerplatte, wobei die beiden vorzugsweise ringförmig ausgebildeten Teile der Trägerplatte koaxial angeordnet und um zwei zueinander im Wesentlichen normale Drehachsen verschwenkbar sind.

Gemäß einem besonders bevorzugten Ausführungsbeispiel der Erfindung ist dabei vorgesehen, dass die Trägerplatte um eine zu ihrer Hauptebene im Wesentlichen parallelen Drehachse schwenkbar an der Haltevorrichtung gelagert ist und genau eine vorzugsweise kreisförmige Durchtrittsöffnung aufweist, in der eine ringförmige Spannvorrichtung zum Fixieren des Formrohlings mittels eines scheibenförmigen Halteelementes um eine Drehachse, die mit der Drehachse der Trägerplatte einen im Wesentlichen rechten Winkel einschließt und im Wesentlichen parallel zur Hauptebene der Trägerplatte verläuft, schwenkbar gelagert ist.

Eine kompakte Bauweise der Aufspannvorrichtung ergibt sich gemäß einem weiteren Ausführungsbeispiel der Erfindung, wenn die verschiebbar gelagerte Haltevorrichtung bügelförmig, vorzugsweise im Wesentlichen Unförmig, ausgebildet ist und zwei im Wesentlichen parallele Schenkel sowie einen die beiden Schenkel verbindenden Steg aufweist, wobei die Trägerplatte zwischen den seitlichen Schenkeln der bügelförmigen Haltevorrichtung drehbar gelagert ist.

Dabei kann eine besonders geringe Bauhöhe erreicht werden, wenn der maximale Abstand der Drehachse der Trägerplatte zum Steg der bügelförmigen Haltevorrichtung kleiner als der maximale Abstand von der Drehachse zum äußeren Rand der Trägerplatte ist, sodass die bügelförmige Haltevorrichtung den Drehwinkel der Trägerplatte beschränkt bzw. als Anschlag für die Trägerplatte dient.

Dabei kann eine allseitige Bearbeitung des Formrohlings auch dann schon erreicht werden, wenn der Drehwinkel für die Trägerplatte kleiner als 150° ist, wobei eine geringe Bauhöhe der Aufspannvorrichtung und gleichzeitig eine allseitige Bearbeitung des Formrohlings gewährleistet wird, wenn der Drehwinkel für die Trägerplatte bei etwa 100° liegt.

Weiters sieht die Erfindung vor, dass der Formrohling um wenigstens eine Drehachse über einen Winkel größer als 270° drehbar in der wenigstens einen Durchtrittsöffnung gelagert ist, wobei es sich als günstig herausgestellt hat, wenn der Formrohling über einen Winkel um 360° drehbar ist.

Das heißt, um den Formrohling von allen Seiten her bearbeiten zu können und auf diese Weise komplizierte Raumformen zu realisieren, ist es ausreichend, wenn der Formrohling in eine Richtung um 360° drehbar bzw. verschwenkbar und normal dazu um einen Drehwinkel von etwa 100° schwenkbar gelagert ist.

Die Erfindung betrifft weiters eine CAD/CAM-Fräseinrichtung zur Herstellung von zahntechnischen Werkstücken mit einer Aufspannvorrichtung nach einem der Ansprüche 1 bis 17. Durch die verschiebbare Lagerung der Haltevorrichtung und den beiden Bewegungsachsen, die mittels der erfindungsgemäßen Lagerung des Formrohlings bereitgestellt werden, muss die Lagerung für das Bearbeitungswerkzeug nur mehr zwei Bewegungsachsen realisieren können.

Um zu vermeiden, dass zwischen verschiedenen Bearbeitungsvorgängen das Bearbeitungswerkzeug gewechselt werden muss, ist gemäß einem weiteren Ausführungsbeispiel der Erfindung eine Positioniervorrichtung für wenigstens zwei im Wesentlichen parallel nebeneinander angeordnete Bearbeitungswerkzeuge vorgesehen, wobei die Bearbeitungswerkzeuge derart verschiebbar gelagert sind, dass jeweils genau ein Bearbeitungswerkzeug in die Arbeitsposition - bezogen auf die Aufspannvorrichtung -bewegbar ist.

Diese verschiebbare Lagerung der Bearbeitungswerkzeuge stellt also die vierte Bewegungsachse sicher, während die fünfte Bewegungsachse gemäß einem weiteren Ausführungsbeispiel der Erfindung bereitgestellt wird, indem wenigstens ein, vorzugsweise mehrere Bearbeitungswerkzeug(e) in eine erste Bewegungsrichtung verschiebbar an der Positioniervorrichtung gelagert ist (sind) und die Positioniervorrichtung ein Betätigungselement zum Bewegen eines der Bearbeitungswerkzeuge in eine zur ersten Bewegungsrichtung im Wesentlichen normale zweite Bewegungsrichtung aufweist, beziehungsweise indem die Positioniervorrichtung für jedes Bearbeitungswerkzeug ein Betätigungselement aufweist.

Eine konstruktiv einfache Lösung ergibt sich dabei, wenn das Betätigungselement eine Kolben-Zylinder-Einheit aufweist, wobei ein bevorzugtes Ausführungsbeispiel der Erfindung vorsieht, dass das Betätigungselement pneumatisch wirkt. Selbstverständlich eigenen sich auch hydraulisch wirkende Betätigungselemente zur Realisierung des Erfindungsgedankens.

Weitere Vorteile und Einzelheiten der Erfindung werden anhand der nachfolgenden Figurenbeschreibung unter Bezugnahme auf die in der Zeichnung dargestellten Ausführungsbeispiele näher erläutert. Darin zeigt
- Fig. 1: perspektivisch ein erstes Ausführungsbeispiel einer erfindungsgemäßen Aufspannvorrichtung,
- Fig. 2a - 2b: Ausführungsbeispiele mit verschwenkter Aufspannvorrichtung,
- Fig. 3a - 3c: ein Ausführungsbeispiel einer erfindungsgemäßen Bearbeitungsmaschine in einer Perspektive, einer Ansicht und einer Draufsicht und
- Fig. 4: perspektivisch ein Ausführungsbeispiel einer erfindungsgemäßen Positioniervorrichtung.

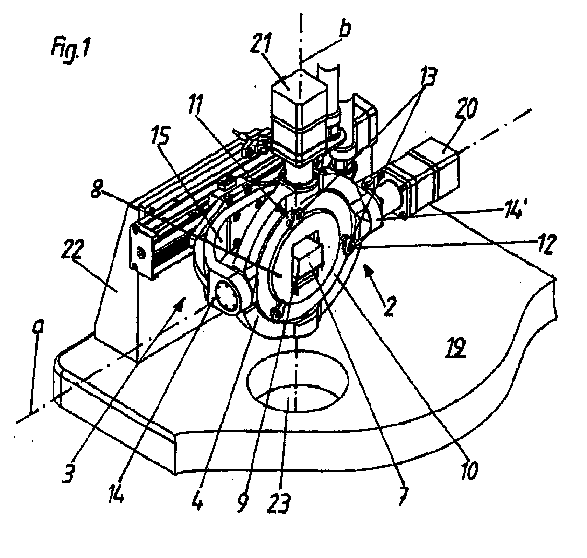

Fig. 1 zeigt in einer Perspektive ein erstes Ausführungsbeispiel einer erfindungsgemäßen Aufspannvorrichtung 2. Die Aufspannvorrichtung 2 ist über die bügelförmige Haltevorrichtung 3 verschiebbar an einem Sockel 22 angeordnet. Der Sockel 22 ist auf einer Basisplatte 19 einer rechnergesteuerten spanabhebenden Bearbeitungsmaschine 1 derart angeordnet, dass sich die Staubdurchtrittsöffnung 23 in der Basisplatte 19 direkt unterhalb des zu bearbeitenden Formrohlings 7 befindet.

Der Formrohling 7 ist in einer Durchtrittsöffnung 9 eines scheibenförmigen Halteelementes 8 befestigt, beispielsweise geklebt und wird mittels dieses scheibenförmigen Halteelementes 8 in der Spannvorrichtung 10 befestigt. Dazu weist die Spannvorrichtung 10 mehrere Klemmeinrichtungen 11 auf, wobei jede Klemmeinrichtung 11 eine Klemmbacke 13 umfasst, die mittels einer Stelischraube 12 arretiert wird, sodass das scheibenförmige Halteelement 8 mit dem darin befestigten Formrohling 7 lagefixiert werden kann.

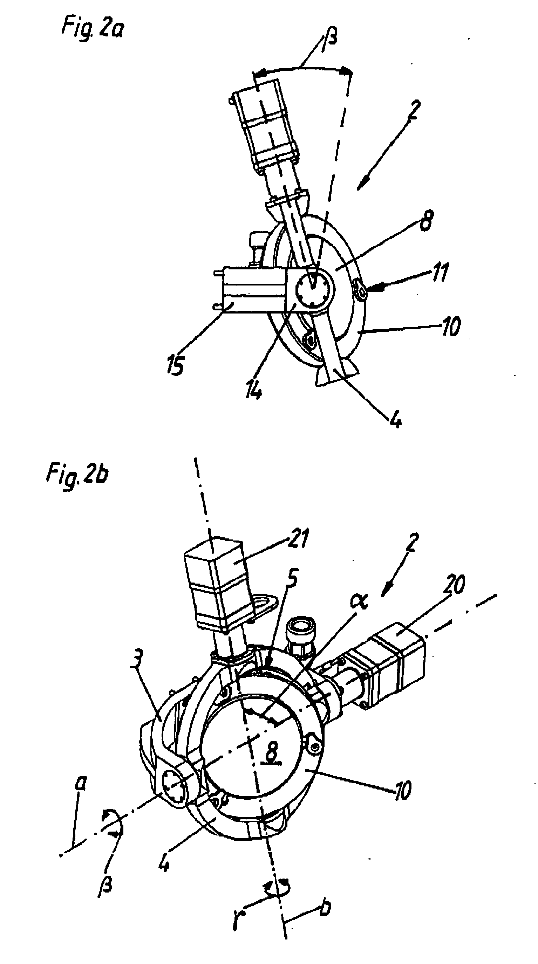

Wie insbesondere aus den Figuren 2a und 2b ersichtlich, ist die Trägerplatte 4 der Aufspannvorrichtung 2 an der Haltevorrichtung 3 um die Drehachse a drehbar gelagert, wobei ist der Abstand von der Drehachse a zum Steg 15 kleiner ist, als der Abstand von der Drehachse zum äußeren Rand der Trägerplatte 4, wodurch der Drehwinkel β der Trägerplatte 4 vom Steg 15 der Haltevorrichtung 3 beschränkt wird.

In der Durchtrittsöffnung 5 der ringförmig ausgebildeten Trägerplatte 4 ist die ebenfalls ringförmig ausgebildete Spannvorrichtung 10 um die Drehachse b, die mit der Drehachse a einen rechten Winkel α einschließt um einen Drehwinkel γ von 360° drehbar angeordnet.

Anders ausgedrückt wird die Trägerplatte von zwei koaxialen Ringen gebildet, von denen der äußere Ring drehbar an der Haltevorrichtung und der innere Ring drehbar am äußeren Ring gelagert ist, wobei die Drehachsen des äußeren und des inneren Ringes einen Winkel von 90° einschließen.

Die Verschwenkung bzw. Drehung der Trägerplatte 4 um die Drehachse a sowie des Spannmechanismus 10 um die Drehachse b erfolgt beim dargestellten Ausführungsbeispiel rechnergesteuert über Antriebseinheiten 20, 21.

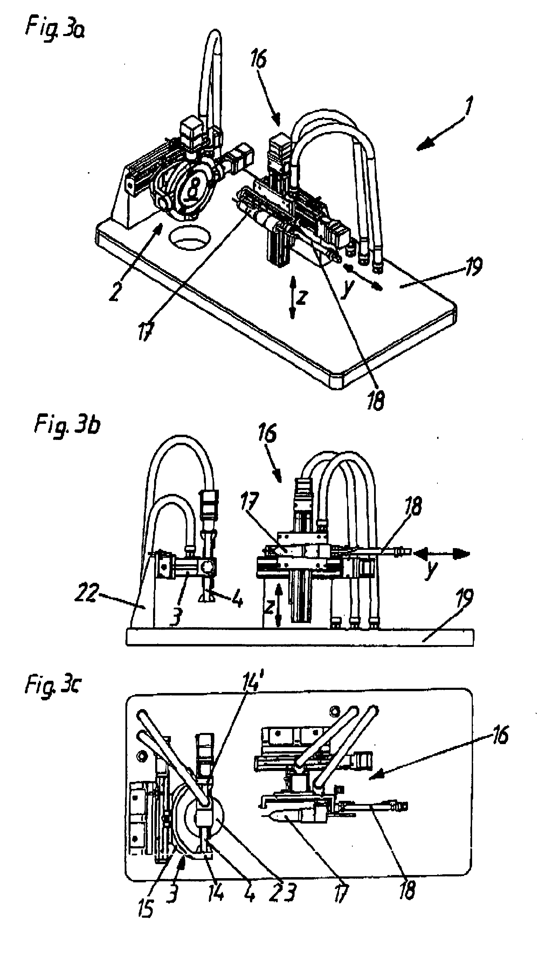

In den Fig. 3a bis 3c ist ein Ausführungsbeispiel einer erfindungsgemäßen CAD/CAM-Fräseinrichtung 1 dargestellt, die eine erfindungsgemäße Aufspannvorrichtung 2 aufweist. Horizontal beabstandet von der Aufspannvorrichtung 2 ist auf der Basisplatte 19 eine Positioniervorrichtung 16 für ein Bearbeitungswerkzeug 17 angeordnet. Das Bearbeitungswerkzeug 17 ist an der Positioniervorrichtung 16 in eine erste Bewegungsrichtung z verschiebbar gelagert und wird, nachdem es in die entsprechende vertikale Lage gebracht wurde, mittels eines Betätigungselementes 18 das beim gezeigten Ausführungsbeispiel von einer pneumatischen Kolbenzylindereinheit gebildet wird, in Bewegungsrichtung y in Richtung der Aufspannvorrichtung 2 bzw. von dieser weg bewegt.

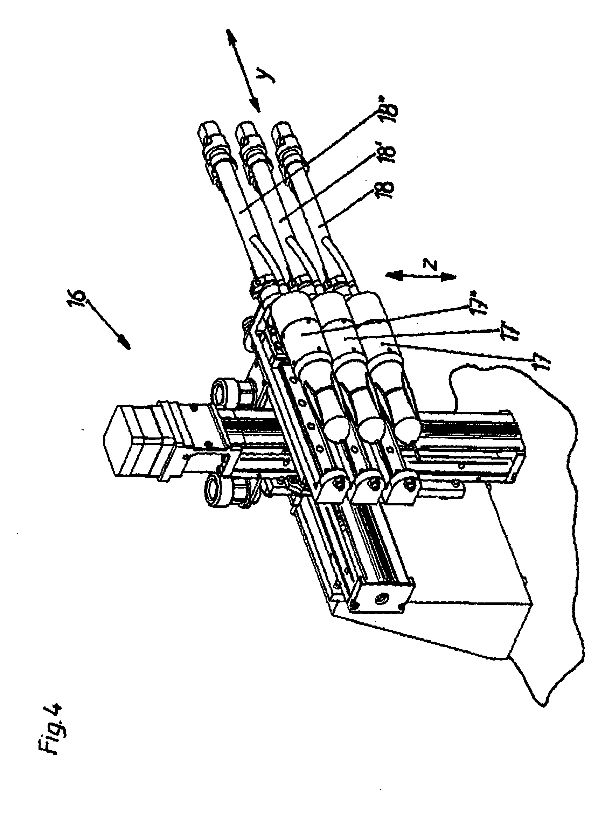

Fig. 4 zeigt ein bevorzugtes Ausführungsbeispiel einer erfindungsgemäßen Positioniervorrichtung 16. Bei diesem Ausführungsbeispiel sind an der Positioniervorrichtung 16 drei Bearbeitungswerkzeuge 17, 17', 17" in Bewegungsrichtung z gemeinsam verschiebbar angeordnet, wobei die Positioniervorrichtung 16 für jedes der Bearbeitungswerkzeuge 17, 17', 17" ein Betätigungselement 18, 18', 18" in Form einer pneumatischen Kolbenzylindereinheit aufweist. Durch diese Ausführung ergibt sich der Vorteil, dass auch bei der Durchführung unterschiedlicher Fräsvorgänge das Bearbeitungswerkzeug 17, 17', 17" nicht wie bisher üblich gewechselt werden muss, sondern es wird in einfacher Weise durch Verfahren in y und z Richtung das jeweils benötigte Bearbeitungswerkzeug 17, 17', 17" in die Arbeitsposition eingebracht.

Die dargestellten Ausführungsbeispiele von Aufspannvorrichtungen sowie die gezeigte Fräseinrichtung sind selbstverständlich nicht in einschränkendem Sinne zu verstehen, sondern eben nur einzelne Beispiele von zahlreichen Möglichkeiten, den Erfindungsgedanken einer Aufspannvorrichtung mit einer drehbar gelagerten Trägerplatte in deren Durchtrittsöffnung ein Formrohling drehbar lagerbar ist, zu realisieren.

## Patentansprüche

1. Aufspannvorrichtung für eine rechnergesteuerte, spanabhebende Bearbeitungsmaschine, insbesondere für eine CAD/CAM - Fräseinrichtung, zur Herstellung von zahntechnischen Werkstücken mit einer verschiebbar gelagerten Haltevorrichtung, an der eine Trägerplatte zur Aufnahme eines Formrohlings gelagert ist, **dadurch gekennzeichnet, dass** die Trägerplatte (4) wenigstens eine Durchtrittsöffnung (5) aufweist, in der der Formrohling (7) wenigstens um eine zur Hauptebene der Trägerplatte (4) im Wesentlichen parallele Drehachse (a, b) schwenkbar anordenbar bzw. angeordnet ist und dass die verschiebbar gelagerte Haltevorrichtung (3) bügelförmig, vorzugsweise im Wesentlichen U-förmig, ausgebildet ist und zwei im Wesentlichen parallele Schenkel (14, 14') sowie einen die beiden Schenkel verbindenden Steg (15) aufweist, wobei die Trägerplatte (4) zwischen den seitlichen Schenkeln (14, 14') der bügelförmigen Haltevorrichtung (3) drehbar gelagert ist.

2. Aufspannvorrichtung nach Anspruch 1, **dadurch gekennzeichnet, dass** der maximale Abstand der Drehachse (a) der Trägerplatte (4) zum Steg (15) der bügelförmigen Haltevorrichtung (3) kleiner als der maximale Abstand von der Drehachse (a) zum äußeren Rand der Trägerplatte (4) ist, sodass die bügelförmige Haltevorrichtung (3) den Drehwinkel (β) der Trägerplatte (4) beschränkt bzw. als Anschlag für die Trägerplatte (4) dient.

3. Aufspannvorrichtung nach Anspruch 2, **dadurch gekennzeichnet, dass** der Drehwinkel (β) für die Trägerplatte (4) kleiner als 150° ist.

4. Aufspannvorrichtung nach Anspruch 3, **dadurch gekennzeichnet, dass** der Drehwinkel (β) für die Trägerplatte (4) bei etwa 100° liegt.

5. CAD/CAM-Fräseinrichtung zur Herstellung von zahntechnischen Werkstücken, **gekennzeichnet durch** eine Aufspannvorrichtung nach einem der Ansprüche 1 bis 4.

6. CAD/CAM-Fräseinrichtung zur Herstellung von zahntechnischen Werkstücken mit einer Aufspannvorrichtung mit einer verschiebbar gelagerten Haltevorrichtung, an der eine Trägerplatte zur Aufnahme eines Formrohlings gelagert ist, wobei die Trägerplatte (4) wenigstens eine Durchtrittsöffnung (5) aufweist, in der der Formrohling (7) wenigstens um eine zur Hauptebene der Trägerplatte (4) im Wesentlichen parallele Drehachse (a, b) schwenkbar anordenbar bzw. angeordnet ist, insbesondere nach Anspruch 5, **gekennzeichnet durch** eine Positioniervorrichtung (16) für wenigstens zwei im Wesentlichen parallele, nebeneinander angeordnete Bearbeitungswerkzeuge (17, 17', 17"), wobei die Bearbeitungswerkzeuge (17, 17', 17") derart verschiebbar gelagert sind, dass jeweils genau ein Bearbeitungswerkzeug (17, 17', 17") in eine Arbeitsposition - bezogen auf die Aufspannvorrichtung (2) - bringbar ist.

7. Fräseinrichtung nach Anspruch 6, **dadurch gekennzeichnet, dass** wenigstens ein, vorzugsweise mehrere Bearbeitungswerkzeug(e) (17, 17', 17") in eine erste Bewegungsrichtung (z) verschiebbar an der Positioniervorrichtung (16) gelagert ist (sind) und die Positioniervorrichtung (16) ein Betätigungselement (18, 18', 18") zum Bewegen eines der Bearbeitungswerkzeuge (17, 17', 17") in eine zur ersten Bewegungsrichtung (z) im Wesentlichen normale zweite Bewegungsrichtung (y) aufweist.

8. Fräseinrichtung nach Anspruch 7, **dadurch gekennzeichnet, dass** die Positioniervorrichtung für jedes Bearbeitungswerkzeug (17, 17', 17") ein Betätigungselement (18, 18', 18") aufweist.

9. Fräseinrichtung nach Anspruch 7 oder Anspruch 8, **dadurch gekennzeichnet, dass** das Betätigungselement eine Kolben-Zylinder-Einheit aufweist.

10. Fräseinrichtung nach Anspruch 7 oder Anspruch 8, **dadurch gekennzeichnet, dass** das Betätigungselement pneumatisch wirkt.
